Europäisches Patentamt

European Patent Office

Office européen des brevets

(19)

(11) Numéro de publication: **0 244 306**
**B1**

(12) **FASCICULE DE BREVET EUROPEEN**

(45) Date de publication du fascicule du brevet: **06.06.90**

(51) Int. Cl.⁵: **C 03 B 23/025,** C 03 B 35/24,
B 65 G 49/06

(21) Numéro de dépôt: **87400937.6**

(22) Date de dépôt: **23.04.87**

(54) **Transfert de plaques de verre en vue de leur bombage.**

(30) Priorité: **29.04.86 FR 8606172**

(43) Date de publication de la demande:
**04.11.87 Bulletin 87/45**

(45) Mention de la délivrance du brevet:
**06.06.90 Bulletin 90/23**

(84) Etats contractants désignés:
**BE CH DE ES FR GB IT LI SE**

(56) Documents cités:
**EP-A-0 005 306**
**EP-A-0 164 823**
**EP-A-0 169 770**
**BE-A- 756 334**
**FR-A-1 516 646**
**GB-A-1 029 305**
**US-A-3 665 730**

(73) Titulaire: **SAINT-GOBAIN VITRAGE
INTERNATIONAL
18, avenue d'Alsace
F-92400 Courbevoie (FR)**

(72) Inventeur: **Petitcollin, Jean-Marc
12, rue de Verdun Le Plessis Brion
F-60150 Thourotte (FR)**
Inventeur: **Marchal, Pierre
110, rue du Maréchal Joffre
Montmacq F-60150 Thourotte (FR)**
Inventeur: **Letemps, Bernard
5, avenue du Gros Buisson
F-60150 Thourotte (FR)**
Inventeur: **Philibert, Daniel
5, avenue de Caumont
F-60150 Thourotte (FR)**

(74) Mandataire: **Leconte, Jean-Gérard et al
Saint-Gobain Recherche 39, Quai Lucien Lefranc
F-93304 Aubervilliers Cedex (FR)**

Courier Press, Leamington Spa, England.

**Description**

La présente invention concerne le transfert d'objets en plaques tels des plaques de verre, d'un transporteur à un autre dispositif, ce transfert étant applicable notamment dans une installation de bombage de plaques de verre.

Il est connue lors des opérations de bombage de plaques de verre, de transférer lesdites plaques, d'un convoyeur horizontal sur lequel elles arrivent à une forme de bombage, constituée par exemple par un cadre à profil courbe, ouvert en son centre, à l'aide d'un dispositif mécanique de transfert qui saisit les plaques, les soulève, puis les relache et/ou redescend pour les poser sur la forme de bombage qui, entre temps a pu être mise en place sous le dispositif de transfert.

De tels dispositifs sont décrits par exemple dans les demandes de brevet EP—A1—3 391 de Mac-Master, FR—A—2 085 464 de Saint-Gobain.

La préhension des plaques de verre s'effectue généralement grâce à une dépression qui s'exerce soit au travers de l'organe préhenseur du dispositif de transfert (EP—A1—3 391) soit essentiellement à la périphérie dudit organe (FR—A—2 085 464).

Dans ces techniques antérieures, le même dispositif de transfert est mobilisé aussi bien pendant la montée des plaques de verre que pendant leur descente. Il en résulte que les cadences, qui sont certes déjà élevées, ne peuvent malgré tout pas être beaucoup augmentées.

En outre, les plaques de verre doivent être arrêtées avec une grande précision sous le dispositif de transfert, ce qui accroît encore la relative lenteur du procéde et demande du matériel sophistiqué et donc plus coûteux.

Le dispositif mécanique de transfert est par ailleurs coûteux en lui-même, d'autant plus qu'il doit être en matériaux spéciaux pour résister à la chaleur et qu'il doit être prévu démontable pour être changé à chaque modèle de vitrage, différent du modèle précédent par la forme et/ou les dimensions.

Ce dispositif de transfert nécessite en outre d'être enfermé dans une enceinte chauffée qui doit être importante, en particulier en hauteur, pour permettre les mouvements verticaux à chaque prise d'une plaque de verre, ce qui est coûteux en énergie.

Il est par ailleurs connu par le brevet US—A—4 517 001 de disposer d'un dispositif de transfert constitué par un plateau aspirant ayant sa face tournée vers le bas, apte à prendre en charge des plaques de verre amenées sur un convoyeur placé au-dessous de lui et à les translater horizontalement pour les relâcher ensuite sur un cadre de formage ouvert en son centre et à profil courbe. Dans ce système, bien que la montée et la descente des plaques de verre s'effectue à deux endroits différents, on constate toujours une relative lenteur du processus du fait qu'un plateau aspirant prend toujours en charge les plaques de verre et doit dont faire un retour en arrière à vide pour venir prendre en charge une plaque de verre nouvelle dès qu'il en a largué une.

Par ailleurs, une précision de positionnement des plaques de verre sous le plateau aspirant est toujours nécessaire ce qui d'une part complique et d'autre part ralentit la cadence.

En outre, commde déjà dit en relation avec la technique décrite dans la demande de brevet EP—A1—3 391, le dispositif de transfert qui doit être en un matériau résistant à la chaleur est coûteux. Ce coût est encore accru par le coût des moyens de déplacement dudit dispositif de transfert qui doivent être très précis et fonctionner dans des ambiances à température élevée.

Enfin, dans un autre domaine, celui de la manutention de volumes de verre froids, il est connu du brevet BE—A—756 334 un dispositif de transfert de feuilles de verre comprenant un convoyeur supérieure contre lequel le verre est maintenu par des moyens de succion, et muni de moyens d'entraîement afin de faire progresser le verre le long de ce convoyeur. Ce type de manutention demande une précision du positionnement très inférieure à celle requise pour un formage. En outre, rien n'indique qu'on puisse traiter de même des volumes de verre portés au-delà de leur température de déformation.

La présente invention vise à éviter les inconvénients de ces techniques antérieures.

Elle propose pour cela une technique de transfert de plaques de verre d'un transporteur d'amenée desdites plaques, ou d'un moyen support desdites plaques, à une forme de bombage, autorisant des cadences élevées, acceptant les imprécisions de position des plaques de verre sur le transporteur d'amenée ou le moyen support, mettant en oeuvre des moyens plus simples, moins encombrants, ne nécessitant pas de grande enceinte et autorisant ainsi des économies d'énergie.

L'invention propose ainsi un procédé de bombage de plaques de verre portées à température de bombage dans lequel lesdites plaques disponibles, à plat, sensiblement horizontalement, sont élevées verticalement grâce à l'action d'un courant gazeux jusqu'à leur rencontre avec un transporteur supérieur à coussin gazeux, oblique, sont maintenues en contact direct avec ce transporteur et sont simultanément déplacées suivant sa longueur, d'un niveau haut à l'endroit où élevées elles arrivent en contact avec lui, jusqu'à un niveau bas, lorsque plus loin elles le quittent pour être redescendues sur une forme de bombage sur laquelle elles s'affaissent.

Avantageusement, on profite du temps de transfert des plaques le long du transporteur vertical pour les positionner, par exemple au moyen de règles et/ou butées.

L'invention propose également un dispositif pour mettre en oeuvre le procédé, comportant un transporteur supérieur à cussin gazeux, un support bas sensiblement horizontal pour le maintien des plaques de verre à leur entrée dans le dispositif sous une extrémité du transporteur supérieur, une forme de bombage disposée sous l'autre extrémité du transporteur supérieure, des moyens de soufflage de bas en haut d'un gaz de sustentation des plaques de verre, ledit gaz de sustentation maintenant lesdites plaques de verre en contact avec le transporteur, la progression des plaques de verre le long du transporteur étant obtenue par la disposition oblique de celui-ci, associée au soufflage du gaz.

L'invention sera maintenant décrite plus en détail en référence aux figures jointes qui représentent:

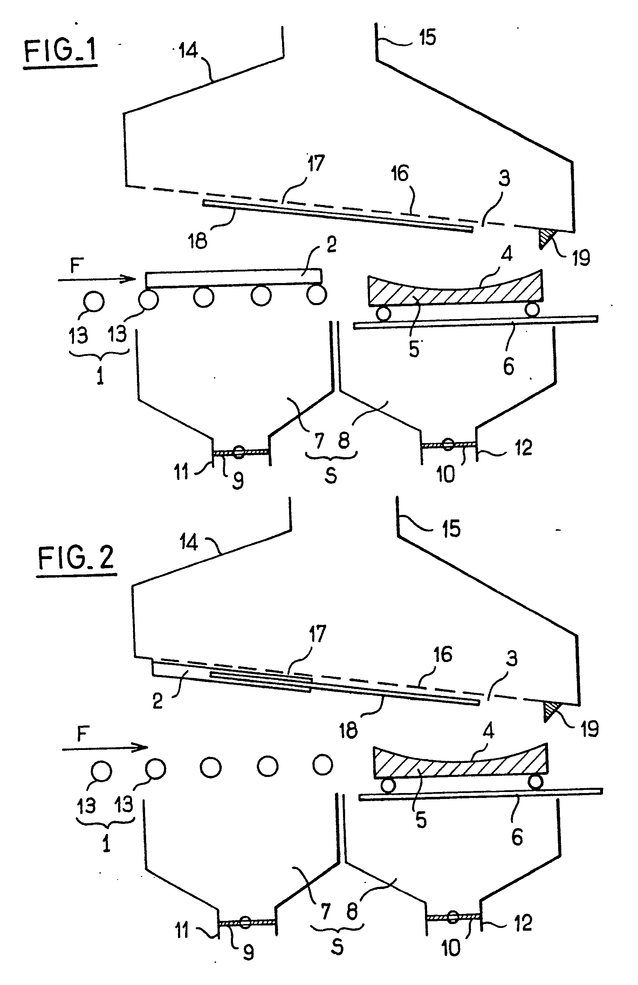

Figures 1, 2, 3, 4, 5: les différentes phases du procédé de bombage d'une plaque de verre dans un dispositif selon une première variante,

. figure 1: schéma illustrant l'arrivée d'une plaque de verre dans le dispositif,

. figure 2: schéma illustrant l'envol de ladite plaque de verre,

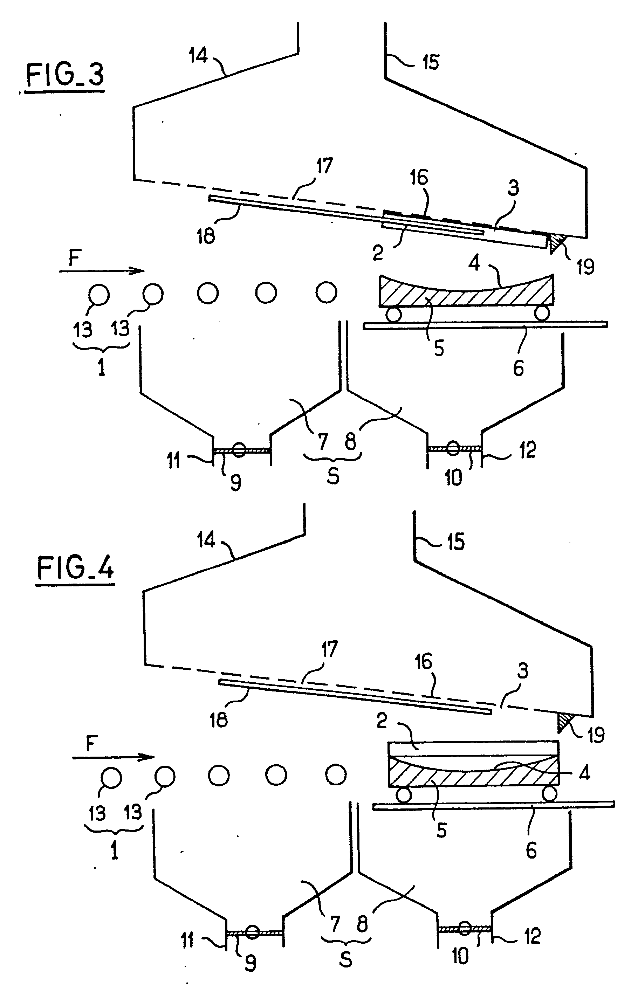

. figure 3: schéma illustrant la progression de la feuille de verre plaquée contre le transporteur supérieur,

. figure 4: schéma illustrant la redescente de la feuille de verre sur la forme de bombage,

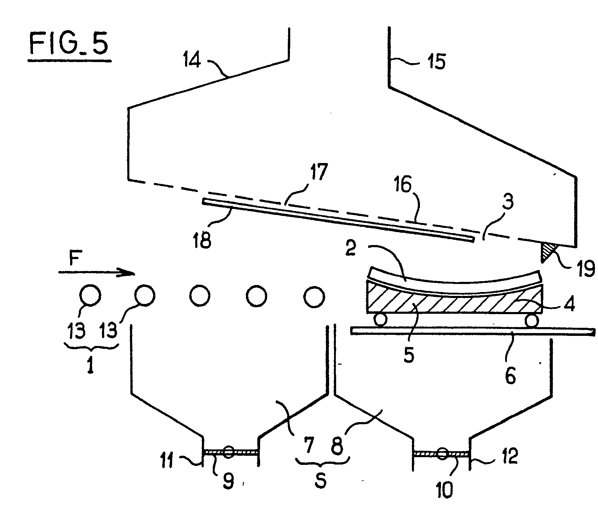

. figure 5: schéma illustrant l'évacuation de la feuille de verre du dispositif de bombage.

Les figures 1, 2, 3, 4 et 5 montrent un dispositif de bombage selon l'invention. Ce dispositif de bombage comporte un premier transporteur 1, horizontal ou sensiblement horizontal amenant dans le sens de la flèche F des plaques de verre telles que 2 dans le dispositif de bombage, à un niveau dit bas en comparaison des autres niveaux hauts auxquels, lesdites plaques de verre 2 seront amenées ultérieurement au cours de l'opération de bombage, un second transporteur 3 qui traverse la totalité du dispositif de bombage à un niveau haut et dont une portion au moins, du côté amont, surplombe une portion aval du transporteur 1, une forme de bombage 4 située en attente dans le dispositif de bombage au-delà du transporteur 1 sous l'extrémité aval du transporteur supérieur 3, des moyens S de soufflage de gaz de bas en haut disposés sout l'extrémité aval du transporteur inférieur 1, sous la forme de bombage et sur toute la longueur du transporteur supérieur 3.

Avantageusement la forme de bombage 4 est mobile, par exemple en étant montée sur un chariot 5 équipé de roulettes, de façon à pouvoir être sorti du dispositif de bombage en roulant sur des rails 6.

Avantageusement encore la forme de bombage est telle qu'elle laisse passer les gaz issus des moyens de soufflage S, et c'est en particulier un cadre à profil courbe, ouvert en son centre, destiné à supporter les plaques de verre 2 par la partie périphérique de leur surface.

De préférence les moyens de soufflage S sont constituées d'au moins deux caissons de soufflage 7 et 8 indépendants l'un de l'autre, le caisson 7 étant disposé sous l'extrémité aval du transporteur inférieur 1 et agissant essentiellement dans cette zone, le caisson 8 étant disposé sous la forme de bombage 4 en position d'attente sous l'extrémité aval du transporteur supérieur 3.

Chaque caisson 7 et 8 est équipé de ses propres moyens de réglage du débit et de la pression du gaz qu'il souffle, ces moyens de réglage étant schématisés par un volet 9 et respectivement 10 disposé à la base de chaque caisson 7 et 8, sur la conduite 11, 12 d'amenée du gaz sous pression.

Les gaz soufflés sont des gaz chauds soit pour maintenir la plaque de verre à température élevée de bombage, soit pour concourir à atteindre cette température élevée.

Le transporteur inférieur 1 peut être comme schématisé sur les figures un transporteur à rouleaux tels que 13. Mais il peus aussi s'agir de n'importe quel moyen d'amenée des plaques de verre à bomber 2, ainsi par exemple un transporteur à bandes ou à galets, à coussin gazeux, un support tel un chariot mettant les plaques de verre sous l'extrémité amont du transporteur supérieur 3 et au dessus des moyens de soufflage S. Le terme transporteur inférieur englobe donc une multitude de moyens possibles.

Sur les figures 1, 2, 3, 4 et 5, le transporteur supérieur 3 est un transporteur à coussin gazeux comprenant un caisson 14 de soufflage du gaz formant le coussin gazeux, alimenté en gaz sous pression par une conduite 15, ce caisson 14 étant délimité sur sa face inférieure destinée à être en regard avec les plaques de verre 2 par une plaque 16 perforée d'orifices tels que 17 par lesquels s'échappe le gaz. Ceci est une description schématique d'un convoyeur à coussin gazeux, mais de tels convoyeurs sont bien connus et une description plus détaillée est superflue. Bien entendu d'autres variantes de convoyeur à coussin gazeux sont possibles: avec des buses ou plots de soufflage à la place des orifices 17 au travers de la plaques 16, avec une pluralité de caissons à la place d'un seul couvrant toute la surface du convoyeur, etc.

Comme transporteur à coussin gazeux on peut ainsi avantageusement faire appel à celui décrit dans la publication de brevet français 1 527 937.

Ce transporteur 3 présente sa face en regard des plaques de verre à transporter, dirigée vers le base; il est oblique, c'est-à-dire que la zone qui reçoit les plaques de verre est à un niveau différent de la zone à laquelle parviennent lesdites plaques de verre après s'être déplacées le long dudit transporteur, et il est alimenté en gaz chauds de façon à conserver aux plaques de verre la température élevée qu'elles possèdent en arrivant dans le dispositif, ou à concourir à leur élévation de température, permettant ainsi leur bombage et éventuellment leur trempe ultérieure.

La différence de pression qu'applique les plaques de verre contre le transporteur supérieur 3 est relativement faible et ce transporteur supérieur 3 est oblique descendant pour permettre auxdites plaques de verre de se translater seules.

Avantageusement, des moyens supplémentaires, tels que par exemple une règle 18, une butée 19 de préférence dont les positions sont ajustables peuvent être prévus pour faciliter le guidage des plaques de verre 2 pendant leur évolution le long de ce transporteur à coussin gazeux 3 et leur arrêt à l'aplomb de la forme de bombage 4. Dans le cas où le transporteur 3 est oblique, mais l'inclinaison n'est pas suffisante pour que le déplacement des plaques de verre 2 s'effectue seul, des moyens aptes à aider à la progression des plaques de verre sont prévus. Il peut s'agir par exemple de systèmes à chaine, ou à doigt mobile se déplaçant sur toute la longueur du convoyeur 3.

Le système montré sur les figures 1, 2, 3, 4 et 5 fonctionne de la façon décrite ci-après.

Une plaque de verre 2 arrive dans le dispositif de bombage sur le transporteur inférieure 1 (phase illustrée par la figure 1) ou est disponible à l'entrée de ce dispositif par exemple posée sur un support. Dès que cette plaque est en place, donc au-dessus du caisson de soufflage 7, le soufflage se met en action, soulève la plaque de verre et la plaque contre le transporteur supérieur 3 à coussin d'air (phase illustrée par la figure 2).

Le soufflage ascendant continuant à s'exercer, le plaque de verre reste en contact avec ce transporteur supérieur 3. Le fait que ce transporteur est oblique, entraîne l'avancée de la plaque de verre le long dudit transporteur (phase illustrée par la figure 3).

La plaque de verre passe ainsi sous l'influence du gaz soufflé par le caisson 8.

Une forme de bombage, telle un cadre de bombage, est présente sous l'extrémité aval du transporteur 3, soit qu'elle soit fixe dans cette position, soit qu'elle ait été amenée en position d'attente pendant les phases précédentes, notamment par roulement sur ses rails 6 du chariot 5 qui la porte.

La plaque de verre vient s'arrêter en appui contre la butée 19.

Le souffalge sous la plaque de verre est alors diminué ou supprimé, ce qui a pour conséquence de faire descendre doucement, ou au contraire chuter brusquement, la plaque de verre sur la forme de bombage (phase du procédé illustrée par la figure 4).

Sur la forme de bombage, la plaque de verre à haute température acquiert la forme souhaitée (phase du procédé illustrée par la figure 5) grâce à la gravité et éventuellement la transformation de l'énergie cinétique acquise par la plaque de verre durant sa chute.

Si le soufflage par le caisson 8 n'est pas complètement stoppé, il y a ainsi la possibilité de contrôler la descente de la plaque de verre sur la forme de bombage, et même après cela de contrôler le galbe que prendra ladite plaque de verre au centre de cette forme de bombage constituée par un cadre ouvert en son centre.

Ensuite, la plaque de verre est evacuée du dispositif de bombage. Cela se fait généralement en sortant dudit dispositif, l'ensemble de la forme de bombage et de la plaque de verre qu'il supporte, par roulage du chariot 5 sur les fails 6.

Mais il est également possible de laisser la forme de bombage en place et d'aller récupérer la plaque de verre bombée, seule, par exemple à l'aide d'un système de transfert à ventouse, classique dans le domaine des manipulations de plaques de verre.

La plupart du temps, après bombage, la plaque de verre est soumise à un traitement de trempe.

La forme de bombage peut être concave ou convexe. Elle peut se situer sensiblement au même niveau que le transporteur 1 d'amenée des plaques de verre, ou au contraire à un niveau différent, plus bas ou plus haut.

D'autres moyens peuvent également être prévus en plus, pour compléter ou accélérer le bombage, par exemple une presse.

Dans un tel dispositif les plaques de verre à bomber peuvent se succéder très rapidement. Elles peuvent arriver de façon ininterrompue les unes derrière les autres sur le transporteur d'amenée 1, puis sur le transporteur supérieur 3 et elles peuvent ensuite redescendre ou tomber sur les différentes formes de bombage d'un carrousel. Ainsi une pluralité de chariots chacun porteur d'une forme de bombage, peuvent venir se mettre en place les uns après les autres sous l'extrémité aval du transporteur 3, juste le temps de recevoir une plaque de verre, et ils peuvent ensuite sortir du dispositif et porter leur plaque de verre au poste de travail suivant, notamment un poste de trempe.

Ainsi la cadence peut être très élevée et les consommations en énergie réduites du fait du faible volume à maintenir en température élevée. En effet, l'ensemble du dispositif est enfermé dans une enceinte chauffée, notamment par les gaz chauds soufflés par les différents caissons, mais cette enceinte peut être de faible volume, les deux transporteurs étant à faible distance l'un de l'autre. En outre le gaz soufflé, généralement de l'air, peut être recyclé.

Par ce procédé, les changements de matériel nécessités par les changements de modèle des vitrages à fabriquer, tels qu'ils étaient pratiqués dans l'art antérieur, n'ont plus de raison d'êtré. Tout au plus, éventuellement doit-on modifier la position d'une butée 19 et d'une règle 18 de guide des plaques de verre associée au transporteur supérieur 3.

Le dispositif est particulièrement adapté au bombage de plaques de verre munies sur leur face supérieure de motifs émaillés, qui lors de la phase de bombage sont encore fragiles. L'absence de contact de cette face supérieure des plaques de verre avec tout moyen mécanique évite la détérioration de ces motifs d'émail d'une part, la souillure du matériel d'autre part.

Dans un tel dispositif peuvent se succéder des plaques de verre à bomber, munies ou non de motifs d'émail ou autre, ces motifs pouvant varier d'une plaque de verre à l'autre, et ces plaques de verre ayant des formés et/ou dimensions variées, sans qu'il soit nécessaire de modifier, changer, adapter quoi que ce soit, éventuellement tout au plus la position d'une règle de guidage et d'une butée. Donc aucun temps de mise en température, aucun temps de préparation n'est à prévoir à chaque changement de modèle de vitrage fabriqué.

## Revendications

1. Procédé de bombage de plaques de verre (2) portées à température de bombage selon lequel les plaques de verre (2) disponibles à plat, sensiblement horizontalement, sont élevées verticalement grâce à l'action d'un courant gazeux jusqu'à leur rencontre avec un transporteur supérieur (3) à coussin gazeux, oblique, sont maintenues en contact avec ce transporteur (3) et sont simultanément déplacées suivant sa longueur, d'un niveau haut à l'endroit où élevées elles arrivent à son contact, jusqu'à un niveau bas où elles quittent ce transporteur après avoir été translatées pour être redescendues sur une forme de bombage (4) sur laquelle elles s'affaissent.

2. Procédé de bombage selon la revendication 1, caractérisé en ce qu'on positionne les plaques de verre (2) lors de leur déplacement sur le transporteur (3).

3. Procédé dé de bombage selon l'une des revendications précédentes, caractérisé en ce que les plaques de verre (2) sont maintenues au contact du transporteur supérieur par un courant gazeux ascendant.

4. Procédé de bombage selon l'une des revendications précédentes, caractérisé en ce qu'un courant gazeux ascendant est soufflé sous les plaques de verre (2) pendant leur descente sur la forme de bombage.

5. Procédé de bombage selon la revendication 4, caractérisé en ce que le courant gazeux responsable de la montée des plaques de verre (2) et celui qui agit pendant leur redescante sur la forme de bombage sont deux courants différents émis par des caissons de soufflage indépendants (7, 8).

6. Procédé de bombage selon la revendication 5 caractérisé en ce que les différents gaz soufflés sont des gaz chauds.

7. Procédé de bombage selon l'une des revendications précédentes, caractérisé en ce que la forme de bombage (4) est un cadre à profil courbe, ouverte en son centre.

8. Procédé de bombage selon l'une des revendications précédentes, caractérisé en ec que la forme de bombage (4) ayant reçu une plaque de verre (2) est évacuée du dispositif de bombage avec sa plaque de verre (2).

9. Procédé de bombage selon l'une des revendications précédentes, caractérisé en ce qu'une pluralité de formes de bombage se relaient sous l'extrémité aval du transporteur supérieur.

10. Dispositif de bombage de plaques de verre portées à température de bombage, comportant un transporteur supérieur (3, 17) à coussin gazeux, un support bas (11) sensiblement horizontal pour le maintien des plaques de verre à leur entrée dans le dispositif, sous une extrémité du transporteur supérieur (3), une forme de bombage (4) disposée sous l'autre extrémité du transporteur supérieur, des moyens (7, 8) de soufflage de bas en haut d'un gaz de sustentation des plaques de verre (2), ledit gaz de sustentation maintenant lesdites plaques de verre (4) en contact avec ledit transporteur, la progression des plaques de verre le long du transporteur supérieur (3, 17) étant obtenue par la disposition oblique de celui-ci, associée au soufflage du gaz (7, 8).

11. Dispositif de bombage selon la revendication 10, caractérisé en ce qu'il comporte des moyens de positionnement (18, 19) des plaques de verre (4).

12. Dispositif de bombage selon l'une des revendications 10 ou 11, caractérisé en ce que des moyens tels que chaîne, doigt mobile, rouleaux moteurs sont prévues pour faire progresser les plaques de verre (2) le long du transporteur supérieure (17, 20).

13. Dispositif de bombage selon l'une des revendications 10 à 12, caractérisé en ce que la forme de bombage (4) est un cadre à profil courbe ouvert en son centre.

## Patentansprüche

1. Verfahren zum Biegen von auf Biegetemperatur gebrachten Glaplatten (2), bei dem die flachliegend, im wesentlichen horizontal, angelieferten Glasplatten (2) unter Einwirkung eines Gasstromes vertikal angehoben werden, bis sie auf eine schräg angeordnete, obere, mit einem Gaskissen arbeitende Transporteinrichtung (3) auftreffen, mit dieser Transporteinrichtung (3) in Kontakt gehalten und gleichzeitig längs derselben fortbewegt werden von einem oberen Niveau an der Stelle, wo sie angehoben auf die Transporteinrichtung auftreffen, bis auf ein unteres Niveau, wo sie nach Beendigung dem Verschiebevorganges die Transporteinrichtung verlassen, um auf einer Biegeform (4) wieder abgelegt zu werden, auf der sie gebogen werden.

2. Verfahren zum Biegen nach Anspruch 1, dadurch gekennzeichnet, daß die Glasplatten (2) während der Fortbewegung auf der Transporteinrichtung (3) positioniert werden.

3. Verfahren zum Biegen nach einem der vorhergehenden Ansprüche, dadurch gekennzeichnet, daß die Glasplatten (2) mit Hilfe eines aufsteigenden Gasstromes mit der oberen Tramuporteinrichtung in Kontakt gehalten werden.

4. Verfahren zum Biegen nach einem der vorhergehenden Ansprüche, dadurch gekennzeichnet, Daß während der Ablage der Glasplatten (2) auf der Biegeform ein aufsteigender Gasstrom unter die Glasplatten geblasen wird.

5. Verfahren zum Biegen nach Anspruch 4, dadurch gekennzeichnet, daß der die Aufwärtsbewegung der Glasplatten (2) bewirkende Gasstrom und derjenige, der während ihrer Ablage auf der Biegeform wirkt, zwei verschiedene Gasströme sind, die von jeweils unabhängigen Blaskästen (7, 8) abgegeben werden.

6. Verfahren zum Biegen nach Anspruch 5, dadurch gekennzeichnet, daß die verschiedenen Gasströme heiße Gase sind.

7. Verfahren zum Biegen nach einem der vorhergehenden Ansprüche, dadurch gekennzeichnet, daß die Biegeform (4) ein Rahmen mit gewölbtem Profil ist, der in seiner Mitte offen ist.

8. Verfahren zum Biegen nach einem der vorhergehenden Ansprüche, dadurch gekennzeichnet, daß die Biegeform (4) nach Aufnahme einer Glasplatte (2) aus der Biegeeinrichtung mitsamt der Glasplatte (2) entfernt wird.

9. Verfahren zum Biegen nach einem der vorhergehenden Ansprüche, dadurch gekennzeichnet, daß sich eine Vielzahl von Biegeformen unter dem unteren Ende der oberen Transporteinrichtung herausbewegt.

10. Vorrichtung zum Biegen von auf Biegetemperatur gebrachten Glasplatten, umfassend eine obere, mit einem Gaskissen arbeitende Transporteinrichtung (3, 17), eine im wesentlichen horizontale, untere Auflageeinrichtung (1), von der die Glasplatten bei ihrem Eintritt in die Vorrichtung gehalten werden und die unter dem einen Ende der oberen Transporteinrichtung (3) angeordnet ist, eine Biegeform (4), die unter dem anderen Ende der oberen Transporteinrichtung angeordnet ist, Einrichtungen (7, 8) zum aufwärts gerichteten Blasen eines Gases für die schwebende Abstützung der Glasplatten (2), wobei das Auftriebsgas die Glasplatten (2) in Kontakt mit der Transporteinrichtung hält, und die Fortbewegung der Glasplatten längs der oberen Transporteinrichtung (3, 17) durch die schräge Anordnung derselben in Verbindung mit dem Gasstrom (7, 8) erzielt wird.

11. Vorrichtung zum Biegen nach Anspruch 10, dadurch gekennzeichnet, daß sie Einrichtungen (18, 19) zum Positionieren der Glasplatten (4) aufweist.

12. Vorrichtung zum Biegen nach Anspruch 10 oder 11, dadurch gekennzeichnet, daß Einrichtungen wie eine Kette, bewegliche Finger, Antriebsrollen vorgesehen sind, um die Glasplatten (2) längs der oberen Transporteinrichtung (17) fortzubewegen.

13. Vorrichtung zum Biegen nach einem der Ansprüche 10 bis 12, dadurch gekennzeichnet, daß die Biegeform (4) ein Rahmen mit gewölbtem Profil ist, der in seiner Mitte offen ist.

**Claims**

1. A method of curving plates of glass (2) raised to curving temperature, according to which the glass plates (2), available flat and substantially horizontal, are raised vertically by the action of a gaseous flow until they meet an upper, inclined, gas-cushion conveyor (3), are held in contact with this conveyor (3) and are simultaneously displaced along its length, from a high level at the location at which, raised, they arrive in contact with it, to a low level at which they leave this conveyor after having being moved in translation, to be lowered onto a curving mould (4), onto which they sink.

2. A method of curving according to Claim 1,

characterized in that the glass plates (2) are positioned during their displacement on the conveyor (3).

3. A method of curving according to one of the preceding Claims, characterized in that the glass plates (2) are kept in contact with the upper conveyor by an ascending gas flow.

4. A method of curving according to one of the preceding Claims, characterized in that an ascending gas flow is blown beneath the glass plates (2) during their descent onto the curving mould.

5. A method of curving according to Claim 4, characterized in that the glass flow responsible for the lifting of the glass plates (2) and that which acts during their lowering onto the curving mould are two different flows emitted by independent blowing chests (7, 8).

6. A method of curving according to Claim 5, characterized in that the different blown gases are hot gases.

7. A method of curving according to one of the preceding Claims, characterized in that the curving mould (4) is a frame of curved profile, open at its centre.

8. A method of curving according to one of the preceding Claims, characterized in that the curving mould (4), having received a glass plate (2), is removed from the curving apparatus with its glass plate (2).

9. A method of curving according to one of the preceding Claims, characterized in that a plurality of curving moulds relay below the downstream end of the upper conveyor.

10. Apparatus for curving glass plates raised to curving temperature, comprising an upper gas-cushion conveyor (3, 17), a substantially horizontal low support (11) for holding the glass plates at their entry into the apparatus, below one end of the upper conveyor (3), a curving mould (4) disposed below the other end of the upper conveyor, means (7, 8) for upwardly blowing a support gas for the glass plates (2), said support gas keeping said glass plates (4) in contact with said conveyor, the advance of the glass plates along the upper conveyor (3, 17) being achieved by the oblique arrangement of this conveyor, associated with the blowing of the gas (7, 8).

11. Apparatus for curving according to Claim 10, characterized in that it comprises positioning means (18, 19) for the glass plates (4).

12. Apparatus for curving according to one of Claims 10 or 11, characterized in that means such as a chain, movable finger or driven rollers are provided for advancing the glass plates (2) along the upper conveyor (17, 20).

13. Apparatus for curving according to one of Claims 10 to 12, characterized in that the curving mould (4) is a frame of curved profile, open at its centre.

FIG.1

FIG.2

FIG_3

FIG_4

EP 0 244 306 B1

FIG. 5

3